Europäisches Patentamt

European Patent Office

Office européen des brevets

(11) Veröffentlichungsnummer: **0 515 831 A2**

# EUROPÄISCHE PATENTANMELDUNG

(21) Anmeldenummer: **92106833.4**

(51) Int. Cl.⁵: **G01N 22/00**

(22) Anmeldetag: **22.04.92**

(30) Priorität: **25.05.91 DE 4117086**

(43) Veröffentlichungstag der Anmeldung:
**02.12.92 Patentblatt 92/49**

(84) Benannte Vertragsstaaten:
**FR GB**

(71) Anmelder: **Laboratorium Prof. Dr. Rudolf Berthold GmbH & Co.**
**Calmbacher Strasse 22**

**W-7547 Wildbad 1(DE)**

(72) Erfinder: **Klein, Albert, Dr.**
**Wildbaderstrasse 63**
**W-7540 Neuenburg(DE)**

(74) Vertreter: **Frank, Gerhard, Dipl.-Phys. et al**
**Patentanwälte Dr. F. Mayer & G. Frank, Dipl.**
**Ing. H. Reinhardt, Westliche 24**
**W-7530 Pforzheim(DE)**

(54) **Verfahren zur Bestimmung der Materialeigenschaften durch Reflexions- oder Transmissionsmessungen.**

(57) Bei einem Verfahren zur Bestimmung der Phasenverschiebung bei Reflexions- oder Transmissionsmessungen mit elektromagnetischen Wellen wird außer einer ersten Referenzmessung (Leermessung) zur Erfassung des Anteils der Meßanordnung an der Phasenverschiebung eine zweite Referenzmessung an einer repräsentativen Probe durchgeführt und zunächst die von dieser Repräsentativprobe verursachte Phasenverschiebung exakt bestimmt. Die von den auszumessenden Proben bzw. Prüflingen herrührenden Phasengänge werden dann als Abweichung von dem entsprechenden Phasengang bzw. der Phasenverschiebun gder Repräsentativprobe behandelt und durch Summen/Differenzbildung berücksichtigt, d.h., die tatsächliche Phasenverschiebung einer individuellen Probe setzt sich zusammen aus der Phasenverschiebung der Referenzprobe und einer relativen Phasenverschiebung, die von den Abweichungen des individuellen Prüflings von der Referenzprobe herrührt.

Durch den Vergleich der Frequenzgänge individuelle Probe/Referenzprobe werden die störenden Nicht-Linearitäten bei den hier auftretenden Phasengängen weitgehend eliminiert und somit eine exaktere Bestimmung der Phasenverschiebungen ermöglicht.

FIG. 2

EP 0 515 831 A2

Rank Xerox (UK) Business Services

Die Erfindung betrifft ein Verfahren nach dem Oberbegriff des Patentanspruchs 1.

Für verschiedene Messungen, bei denen es auf die Bestimmung von Materialeigenschaften ankommt, beispielsweise Messungen zur Bestimmung des Wassergehaltes einer Probe bei zahlreichen industriellen oder landwirtschaftlichen Produkten oder Messungen zur Bestimmung der räumlichen Ausdehnung einer Materialschicht werden Reflexions- oder Transmissionsmessungen insbesondere im Mikrowellenbereich durchgeführt. Abgesehen von der Messung der Dämpfung bei Transmissionsmessungen ist auch die Messung der Phasenverschiebung bei der Durchstrahlung der Probe mit Mikrowellen ein zuverlässiger Ausgangspunkt, gegebenenfalls in Kombination mit anderen Meßverfahren wie Dämpfungsmessungen.

Hierbei wird in einem vorgegebenen Frequenzbereich die gemessene Phasenverschiebung $\phi_M$ der die Meßanordnung und die Probe durchlaufenden Welle gegenüber der Welle in einem Vergleichszweig gemessen; hieraus ergibt sich folglich der Frequenzgang $\phi_M(f)$ ,aus dessen Verlauf grundsätzlich auf die tatsächliche Phasenverschiebung $\Phi$ geschlossen werden kann: Wenn dieser Zusammenhang im wesentlichen linear ist, kann man aus dem Frequenzhub $f_2$-$f_1$ und dem entsprechenden Phasenhub $\phi_M(f_2)$-$\phi_M(f_1)$ und unter der Annahme $\phi_o \equiv \phi(f_o) = 0$ z.B. durch Extrapolation des Kurvenverlaufs $\phi_M(f)$ auf $f = 0$ die von einem durchstrahlten Medium (und der Meßanordnung) verursachte, tatsächliche Phasenverschiebung $\Phi$ ermitteln, die sich als $\Phi = \phi_M \pm n \cdot 2\pi$ darstellen läßt, sich also aus der gemessenen Phasenverschiebung durch Addition bzw. Subtraktion eines ganzzahligen Vielfachen von 360° (bzw. $2\pi$ ) ergibt; die eindeutige Bestimmung des zur Berechnung des zu messenden Materialparameters heranzuziehenden Wertes von $\Phi$ setzt daher voraus, daß n eindeutig bestimmbar ist.

Unglücklicherweise ist der Kurvenverlauf $\phi_M(f)$ im ausgemessenen Frequenzband in der Regel jedoch nicht linear, so daß die angesprochene Extrapolation des Kurvenverlaufs auf $f = 0$ zu einer Fehlerbreite bei der Ermittlung des tatsächlichen Wertes von $\phi_O$ führt, die mit wachsender nicht-Linearität des Kurvenverlaufs und/oder mit abnehmender Frequenzbandbreite zunimmt und zu falschen n-Werten und damit zu falschen Meßergebnissen der tatsächlichen Phasenverschiebung $\Phi$ führt.

In der Praxis wird bei derartigen Messungen zunächst eine Referenzmessung bei leerer Meßstrecke (ohne Probe) durchgeführt, um aus dieser Messung eine Referenzkurve $\phi_L(f)$ zu gewinnen; diese Referenzkurve wird dann von der Meßkurve $\phi_M(f)$ subtrahiert, um die durch die Probe bewirkte Phasenverschiebung $\Delta\phi_P(f) = \phi_M(f)$-$\phi_L(f)$ zu ermitteln, danach wird dann die oben beschriebene Extrapolation auf $\Delta\phi_P(f)$ angewendet, in der Hoffnung, den "richtigen" n-Wert und so die tatsächliche Phasenverschiebung der Probe $\Phi_P(f)$ zu ermitteln. Allerdings geht hierbei auch der Phasengang der Leermessung in die n-Bestimmung ein, der z.B. durch Fehlanpassungen der Meßanordnung beeinflußt wird.

Aufgabe der Erfindung ist es, diese Unsicherheiten bei der Bestimmung des n-Wertes und damit die daraus resultierenden Fehler der tatsächlichen Phasenverschiebung der Probe $\Phi_P$ zu minimieren.

Erfindungsgemäß wird diese Aufgabe gemäß dem kennzeichnenden Teil des Patentanspruchs 1 gelöst.

Der Grundgedanke der Erfindung besteht darin, daß durch die zweite Referenzmessung $\phi_R(f)$ im wesentlichen diejenigen Eigenschaften einer repräsentativen Probe erfaßt werden, die insbesondere zum nichtlinearen Verlauf der Funktion $\Delta\phi_P(f)$ führen und damit im wesentlichen verantwortlich für die Unsicherheiten bei der Bestimmung des n-Wertes sind. Hierbei wird davon ausgegangen, daß die Messungen, die mit dem erfindungsgemäßen Verfahren durchgeführt werden sollen, Serienmessungen sind, d.h. an Proben oder Prüflingen durchgeführt werden, die hinsichtlich des auszumessenden Parameters, beispielsweise des Feuchtegehaltes, in statistischer Weise um einen bekannten oder separat zu ermittelnden Mittelwert schwanken; eine "repräsentative" Probe in diesem Sinne ist also ein typischer Vertreter einer solchen Serie von Messungen, bei dem davon ausgegangen werden kann, daß er hinsichtlich des auszumessenden Parameters, z.B. der Feuchtigkeit, im Mittelbereich dieser statistischen Verteilung der Serie zu liegen kommt.

Unter dieser Prämisse ist auch leicht einzusehen, daß die spezifischen Eigenschaften, die zu einem spezifischen Verlauf der Kurve $\Delta\phi_P(f)$ führen, insbesondere auch zu deren nicht-Linearität, bei allen Proben oder Prüflingen der Serie mehr oder weniger stark ausgeprägt vorhanden sind, so daß durch Berücksichtigung der Messung an der repräsentativen Probe ein Meßwert gewonnen werden kann, der weitgehend frei von den durch die nicht-Linearität des Kurvenverlaufes herrührenden Unwägbarkeiten der n-Bestimmung ist.

Die Einbringung der erfindungsgemäßen, zweiten Referenzmessung in das Meßverfahren kann beispielsweise schrittweise gemäß der Ausbildung des Verfahrens nach Unteranspruch 2 erfolgen; hierbei wird im wesentlichen zunächst der n-Wert und die tatsächliche Phasenverschiebung $\Phi_{RP}(f)$ der Repräsentativ-Probe ermittelt, wobei dieser n-Wert durch zusätzliche Messungen, z.B. durch eine Messung der Repräsentativ-Probe bei unterschiedlicher Schichtdicke abgesichert werden kann. Alle folgenden Messungen an den übrigen Prüflingen der Serie erbringen dann eine relative Phasenverschiebung $\Phi_{rel}$ gegenüber der tatsächlichen Phasenverschiebung an der Repräsentativ-Probe $\Phi_{RP}$ deren Bedeutung darin liegt, daß dieser Relativwert mit sehr viel höherer Genauigkeit zu ermitteln ist, da sich die nicht-Linearitäten des Kurvenverlaufs durch die Differenzbildung weitgehend gegenseitig kompensiert haben. Das erfindungsgemäße Verfahren kann mit handelsüblichen Vorrichtungen durchgeführt werden, die Zwischenspeicherung der Phasengänge und Zwischenwerte kann einfach durch geeignete elektronische Speichereinrichtungen erreicht werden.

Eine schematische Darstellung dieses Verfahrensablaufs ist in den Figuren dargestellt.

Wenn hieraus schließlich die tatsächliche Phasenverschiebung der Probe $\Phi_P$ ermittelt ist, kann dieser Wert dann in bekannter Weise benutzt werden, beispielsweise zur Bestimmung von Feuchtigkeit, bzw. Wassergehalt, wie dies beispielsweise in "Mikrowellen-Technologie und Opto-Elektronik" Band 2, 1986 (Konferenzunterlagen der Fachmesse und Konferenz für Höchstfrequenztechnologie) dargestellt ist.

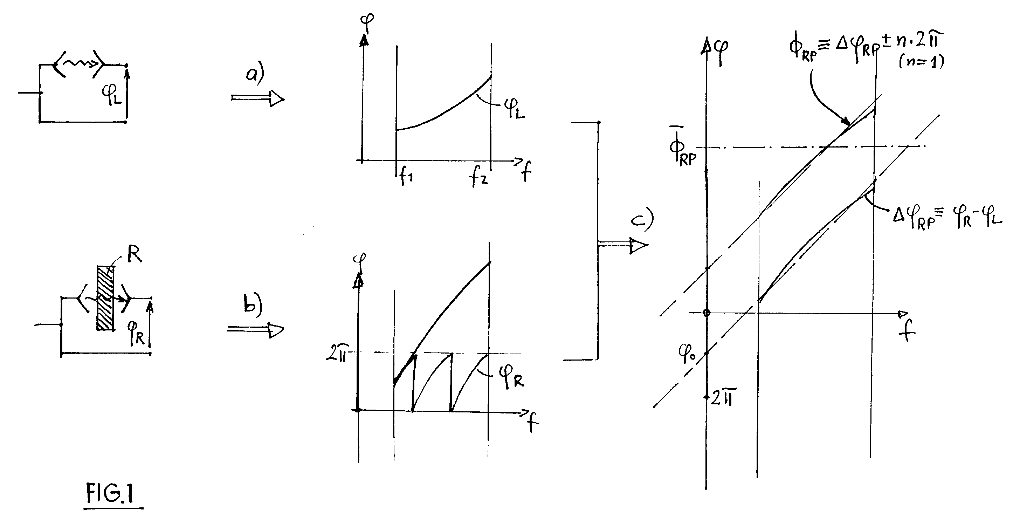

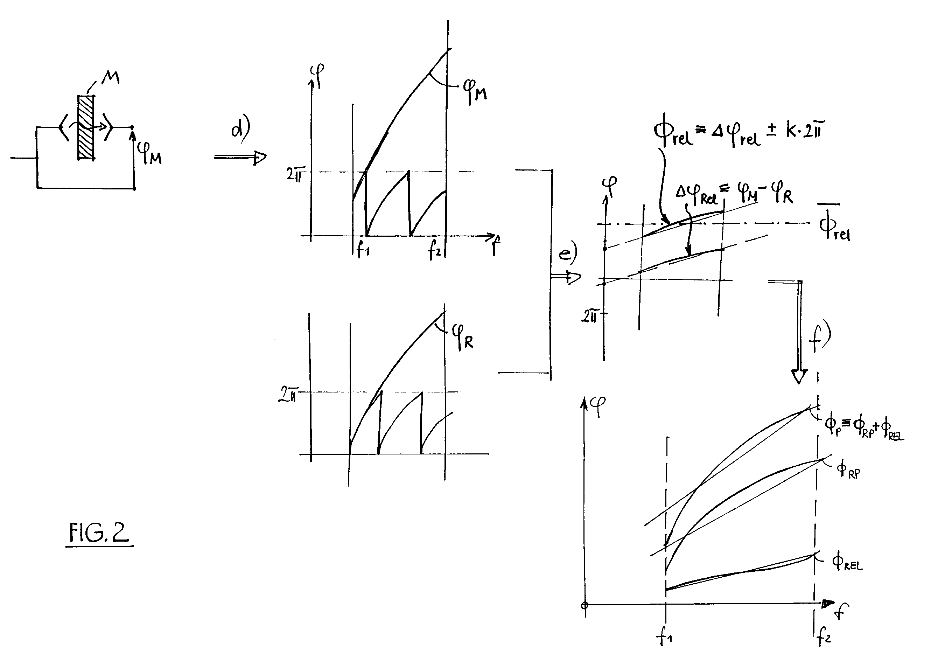

Die in den Figuren 1 und 2 schematisch dargestellten Verfahrensabläufe entsprechen in ihren durch Pfeilen angedeuteten Verfahrensschritten a) bis f) den entsprechenden Merkmalen des Anspruchs 2 und sollen nun noch kurz erläutert werden:

Im ersten Verfahrensschritt (Figur 1) a) wird eine Leermessung durchgeführt, d.h. die Eigenschaften der Mikrowellenanordnung werden erfaßt und es ergibt sich der dargestellte Phasengang $\phi_L(f)$, dieser wird in geeigneten elektronischen Speichereinrichtungen festgehalten.

Als nächster Verfahrensschritt b) wird eine Probe bzw. ein Prüfling R in der schematisch dargestellten Sender-Empfängervorrichtung einer Transmissionsmessung unterzogen und es ergibt sich folglich ein Phasengang $\phi_R(f)$, wie er rechts von dem zu b) zugehörigen Pfeil dargestellt ist (die durchgezogene obere Kurve ergibt sich durch die Überlagerung der Sägezahn-artigen Meßkurve, da prinzipiell die Phasenverschiebung nur im Bereich von $2\pi$ eindeutig ist.

Mit dieser zweiten Referenzmessung einer Repräsentativprobe werden somit alle charakteristischen Eigenschaften eines Prüflings erfaßt, die den Verlauf und insbesondere die Nicht-Linearitäten des Phasenganges $\phi$ bestimmen und zu den oben erläuterten Schwierigkeiten bei der exakten Bestimmung der Phasenverschiebung führen.

Im Verfahrensschritt c) (Figur 1, rechte Seite) wird zunächst die Differenz $\Delta\phi_{RP}$ gebildet (untere Kurve), also diejenige Phasenverschiebung, die von der Repräsentativprobe R herrührt unter Eliminierung der von der Meßanordnung herrührenden Phasenverschiebung $\phi_L$. Hieraus läßt sich dann einfach unter der Beziehung $\Phi_{RP} = \Delta\phi_{RP} \pm n \cdot 2\pi$ die tatsächliche, von der Referenzprobe R verursachte Phasenverschiebung $\Phi_{RP}$ ermitteln, indem man die Kurve soweit nach oben "verschiebt", bis der Achsabschnitt $\phi_O$ im Ordinatenbereich von $\pm\pi$ liegt. Da $\phi_O$ beim dargestellten Beispiel zwischen $-\pi$ und $-2\pi$ liegt, beträgt der zu bestimmende Wert $n$ im dargestellten Beispiel $n = 1$.

Mit dem Schritt c) ist somit durch eine einmalige Messung (die entsprechend präzise sein muß) die wesentliche Komponente der tatsächlichen Phasenverschiebung $\Phi$ einer Probe innerhalb einer Probenreihe ermittelt, so daß die folgenden Messungen und Vergleiche dazu dienen, die individuellen Abweichungen der einzelnen, individuellen Proben bzw. Prüflinge von dieser Repräsentativprobe zu berücksichtigen (Figur 2):

Zunächst wird der Phasengang $\phi_M$ der auszumessenden Probe M aufgenommen und dieser wird mit dem bereits abgespeicherten Phasengang der Referenzprobe R (in Figur 2 zur Verdeutlichung nochmals unterhalb des Phasengangs $\phi_M$ dargestellt) verglichen. Durch Differenzbildung $\phi_M - \phi_R$ (Figur 2 rechts oben) errechnet man somit die relative Phasenverschiebung $\Delta\phi_{rel}$, die aus der "individuellen" Abweichung der Meßprobe M von der Referenzprobe R herrührt und hieraus läßt sich dann wie oben geschildert, wiederum die tatsächliche relative Phasenverschiebung $\Phi_{rel}$ ermitteln.

In einem letzten Rechenschritt f) (Figur 2 rechts unten) ergibt sich nun auf einfache Weise der gesuchte bzw. auszumessende tatsächliche Phasengang $\Phi_P$ der Probe M als $\Phi_P = \Phi_{RP} + \Phi_{rel}$.

Die Messung aller nachfolgenden Prüflinge geschieht auf die gleiche Weise, d.h. es brauchen dann lediglich noch die Verfahrensschritte d) bis f) durchgeführt zu werden, also die meßtechnischen Abweichungen des jeweiligen Prüflings von der Referenzprobe berechnet zu werden.

Für die oben angedeuteten Anwendungen der derart ermittelten tatsächlichen Phasenverschiebung $\Phi$ wird in der Regel nicht die gesamte Information, d.h. der gesamte Phasengang $\Phi(f)$ benötigt, sondern ein Mittelwert oder Repräsentantivwert, der an unterschiedlichen Stellen der beschriebenen Verfahrensabläufe gewonnen werden kann; diese Mittelwerte sind mit einem Querstrich in den Figuren gekennzeichnet, so daß entsprechend der Bestimmung des Phasenganges $\Phi_P(f)$ auch die entsprechende Beziehung für die jeweiligen Mittelwerte $\overline{\Phi}_P$ gilt.

Die am Beispiel einer Transmissionsmessung beschriebene Vorgehensweise läßt sich auch auf Reflexionsmessungen z.B. zur Füllstandsmessung übertragen. Die Leermessung ist in diesem Fall beispielsweise die Messung im Abstand Null an einem idealen Reflektor, die zweite Referenzmessung wird dann bei repräsentativem Füllstand mit repräsentativem Material unter repräsentativen Meßbedingungen durchgeführt.

**Patentansprüche**

1. Verfahren zur Bestimmung von Materialeigenschaften, beispielsweise des Feuchtigkeitsgehaltes von Proben, durch Messung der Reflexion oder der Transmission von elektromagnetischen Wellen, insbesondere Mikrowellen, an einer Anzahl hinsichtlich ihrer zu messenden Eigenschaft ähnlichen Proben und durch Auswertung des Frequenzganges der gemessenen Phasenverschiebung $\phi_M$, wobei in einer aus Sender und Empfänger gebildeten Meßstrecke eine erste Referenzmessung (Leermessung) zur Erfassung des Anteils der Meßanordnung an der Phasenverschiebung $\phi_M$ durchgeführt wird, und dieser Anteil beim Meßergebnis einer Probe berücksichtigt wird, bevor die Umsetzung des Meßergebnisses in die Zielgröße, beispielsweise der relativen Feuchtigkeit, entsprechend einer durchzuführenden Kalibrierung erfolgt, dadurch gekennzeichnet, daß zusätzlich zu der ersten Referenzmessung und in derselben Meßstrecke eine zweite Referenzmessung an einer hinsichtlich ihrer meßergebnisrelevanten Eigenschaften repräsentativen, hinsichtlich des Wertes ihrer Zielgröße nicht bekannten Probe durchgeführt wird, und die hieraus sich ergebende Messung bei der Auswertung herangezogen wird.

2. Verfahren nach Anspruch 1, gekennzeichnet durch folgende Verfahrensschritte:
   a) Durchführung der ersten Referenzmessung (Leermessung) und Abspeicherung des gemessenen Phasengangs $\phi_L(f)$,
   b) Durchführung der zweiten Referenzmessung (mit Repräsentativprobe) und Abspeicherung des gemessenen Phasengangs $\phi_R(f)$,
   c) Ermittlung der Differenzfunktion $\Delta\phi_{RP} = \phi_R - \phi_L$ und Berechnung unter Bestimmung des n-Wertes der durch die Repräsentativprobe verursachten, tatsächlichen (absoluten) Phasenverschiebung $\Phi_{RP}(f)$,
   d) Durchführung der Messung an der Probe und Abspeicherung des gemessenen Phasengangs $\phi_M(f)$,
   e) Ermittlung der Differenzfunktion $\Delta\phi_{rel} = \phi_M - \phi_R$ und daraus Ermittlung der durch die Messung an der Probe gegenüber der Messung an der Repräsentativprobe verursachten (relativen) Phasenverschiebung $\Phi_{rel}$, und

   f) Berechnung der durch die Probe verursachten, tatsächlichen (absoluten) Phasenverschiebung $\Phi_P$ durch Bildung der Summe $\Phi_{rel} + \Phi_{RP}$.

FIG.1

a)

b)

c)

$\varphi_L$

$f_1$   $f_2$   $f$

R   $\varphi_R$

$2\widetilde{\pi}$   $\varphi_R$

$\Delta\varphi$   $\phi_{RP} \equiv \Delta\varphi_{RP} \pm n \cdot 2\widetilde{\pi}$ $(n=1)$

$\overline{\phi}_{RP}$

$\Delta\varphi_{RP} \equiv \varphi_R - \varphi_L$

$\varphi_0$

$2\widetilde{\pi}$   $f$

EP 0 515 831 A2

FIG.2

EP 0 515 831 A2